# EUROPEAN PATENT APPLICATION

(11) **EP 2 842 908 A1**
(43) Date of publication of application: **04.03.2015**
(21) Application number: 13182079.7
(22) Date of filing: 28.08.2013
(51) Int. Cl.: C01B 25/455, H01M 10/052, H01M 10/0567

(54) **Production of metal difluorophosphates in liquid phase**

(71) Applicant: Solvay SA, 1120 Bruxelles (BE)
(72) Inventor: The designation of the inventor has not yet been filed
(74) Representative: Mross, Stefan P.M.

(57) **Abstract**

The present invention relates to a method for the production of metal difluorophosphates, specifically to the production of LiPO₂F₂, in an organic solvent. More specifically, it relates to a method for the production of metal difluorophosphates comprising a step of reacting a compound selected from the group consisting of phosphorus pentafluoride (PF₅), phosphoryl fluoride (POF₃), and mixtures thereof, with a metal orthophosphate, bicarbonate or carbonate in an organic solvent, preferably in an organic solvent which dissolves the product metal difluorophosphates. The present invention is also directed to novel crystalline forms of LiPO₂F₂ and electrolyte solutions thereof.

## Description

The present invention relates to a method for the production of metal difluorophosphates, specifically to the production of LiPO₂F₂, in an organic solvent. More specifically, it relates to a method for the production of metal difluorophosphates comprising a step of reacting a compound selected from the group consisting of phosphorus pentafluoride (PF₅), phosphoryl fluoride (POF₃), and mixtures thereof, with a metal orthophosphate, bicarbonate or carbonate. The present invention is also directed to novel crystalline forms of LiPO₂F₂ and electrolyte compositions comprising them.

Metal difluorophosphates are useful compounds in electrolyte compositions for metal ion batteries. As a specific example, lithium difluorophosphate, LiPO₂F₂, is useful as electrolyte salt or additive for an electrolyte composition comprising an electrolyte salt for lithium ion batteries.

WO 2012/016924 describes the reaction of solid Li₃PO₄ with gaseous POF₃ or gaseous PF₅ to yield LiPO₂F₂. Furthermore, WO 2012/016924 outlines the possibility of performing the process in presence of an organic solvent for the gaseous POF₃ or the gaseous PF₅ as well as the use of an organic solvent for the extraction of the reaction product.

Now therefore, the invention makes available an improved process for the production of metal difluorophosphates, specifically for the production of LiPO₂F₂ in a technically feasible and economical manner. It is an object of the present invention to provide a process for the production of metal difluorophosphates, specifically for the production of LiPO₂F₂, which is advantageous in terms of the overall yield, the purity, the physicochemical properties including but not limited to the crystallinity and/or density of the product, the energy consumption, the safety requirements, the ease of work-up, and/or the side-product profile. Furthermore, it is an object of the present invention to provide LiPO₂F₂ in a crystal form which is advantageous in terms of stability, solubility, dissolution rate, and/or ease of handling.

This object and other objects are achieved by the invention as outlined in the patent claims.

Accordingly, one embodiment of the present invention is a process for the production of a compound of the general formula MPO₂F₂, wherein M is Li, Na or K, comprising a reaction step (I) of a compound of general formula M₃PO₄, M₃PO₄, M₂CO₃, and MHCO₃, or a mixture thereof, wherein each M is defined as above, with POF₃, PF₅ or a mixture thereof, to form the compound of general formula MPO₂F₂, wherein the reaction is performed in the presence of an organic solvent, preferably in an organic solvent in which the compound of general formula MPO₂F₂ has a solubility of > 1 g/l at ambient conditions, preferably of > 5 g/l, more preferably of > 10 g/l. The inventive process is not limited to the metals M as given above. It can also be used to produce metal difluorophosphates of other metals like Mg, Zn, Ca, Sr, Ba, or Fe.

In a preferred embodiment, M is Li. In a more preferred embodiment, the reaction is the reaction of Li₃PO₄ with POF₃ to form LiPO₂F₂. Accordingly, LiPO₂F₂ is produced by the reaction of phosphoryl fluoride (POF₃) and lithium orthophosphate (Li₃PO₄) following the reaction scheme :

2POF₃ + Li₃PO₄ → 3 LiPO₂F₂

The reaction is exothermic. Generally, the temperature of the reaction mixture rises upon addition of the POF₃ to the mixture of the Li₃PO₄ and the organic solvent. The addition of the POF3 is advantageously started at ambient temperature and the temperature in the reaction mixture rises while reaching a maximum temperature at some point during the addition of POF₃. In a preferred embodiment, the process is performed at a maximum reaction temperature from 0 to 85°C, preferably at a maximum reaction temperature from 30 to 60°C.

In another preferred embodiment, the initial molar ratio of POF₃ to Li₃PO₄ is equal to or greater than 1 and equal to or lower than 3.

The term "organic solvent" is intended to denote any compound comprising at least one carbon atom that is liquid under the reaction conditions. Advantageously, the organic solvent does not react with any of the starting materials or the reaction product. Useful examples of an organic solvent are aprotic organic solvents, for example cyclic and acyclic ethers, esters, ketones, carbonates, nitriles, sulfones and mixtures thereof wherein the solubility of the compound of general formula MPO₂F₂ is > 1 g/l at ambient conditions. Examples of useful organic solvents include acetone, acetonitrile, dimethylformamide, sulfolane.

The term "ambient conditions" is intended to denote conditions referring to the standard ambient temperature and pressure (25°C, 100 kPa).

The term "solubility" is intended to denote the analytical composition of a saturated solution expressed as a proportion of a designated solute in a designated solvent according to IUPAC definition.

In a preferred embodiment, the organic solvent is a diether or a polyether, more preferably a diether, most preferably the diether is 1,2 dimethoxyethane. The term "diether" is intended to denote a compound comprising two moieties of the structural motif "C-O-C", i.e. a compound comprising two oxygen atoms each directly connected to two groups selected from alkyl, alkylene, (hetero)aryl or (hetero)arylene. The term "polyether" is intended to denote a compound comprising at least three moieties of the structural motif "C-O-C", i.e. a compound comprising at least three oxygen atoms each directly connected to two groups selected from alkyl, alkylene, (hetero)aryl or (hetero)arylene. The diether and/or polyether can advantageously be substituted, for example substituted by fluorine. The diether and/or polyether can advantageously be cyclic or acyclic. Useful examples of diethers are 1,2-diethoxyethane. Useful examples of polyethers are glymes of the general
formula CH₃O(CH₂CH₂O)ₙCH₃ with n > 1 or crown ethers, for example 12-crown-4, 15-crown-5, 18-crown-6, dibenzo-18-crown-6. Most preferably, the organic solvent is 1,2-dimethoxyethane.

Phosphoryl fluoride (POF₃) can be obtained commercially, e.g. from ABCR GmbH & Co. KG, or can be prepared by a known process in the art. For example, POF₃ can be prepared by fluorination of phosphoryl chloride with HF and/or other fluorinating agents, for example, ZnF₂. Alternatively, it may be also prepared by the reaction of H₃PO₄/P₂O₅, HF/H₂O and SO₃/H₂SO₄. Sometimes, the POF₃ obtained may contain PF₅ as impurity, or vice versa, PF₅ may comprise POF₃ as impurity. The advantage of the process of the invention is that even such mixtures can be applied without impact on the yield.

PF₅ may be obtained commercially, e.g. from Praxair, or it may be prepared from PCl₅ and HF or, as described in EP-A-0816287, for example from PCl₃, Cl₂ and HF.

Li₃PO₄ is commercially available, e.g. from Strem Chemicals, Inc, Newburyport, USA, or from Chemetall GmbH, Germany. It is a solid with a melting point far above 1000°C.

Preferably, the reaction between PF₅ and Li₃PO₄, between POF₃ and Li₃PO₄ and between mixtures of POF₃ and PF₅, respectively, and Li₃PO₄ is performed in the absence of water or moisture. Thus, the reaction may be performed at least for a part of its duration in the presence of anhydrous organic solvents. It is preferred to perform the reaction in apparatus made from steel or other materials resistant against corrosion, e.g. in reactors made of or clad with Monel metal and/or Teflon^{®}.

Li₃PO₄ is preferably applied in the form of small particles, e.g. in the form of a powder. If desired, it can be dried before introducing it into the reaction.

The reactants POF₃ or PF₅, respectively, can be introduced into the reaction in gaseous form or in the form of a solution in suitable organic solvents, preferably in gaseous form, more preferably by means of an immersion tube. If the POF₃ or PF₅ are introduced in form of a solution it is preferred that the same solvent or solvent mixture is used for the reaction and for preparing the POF₃ or PF₅ solution.

The reaction time is selected such that the desired degree of conversion is achieved. Often, a reaction time of 1 second to 5 hours gives good results for the reaction between POF₃, PF₅ and any mixtures thereof with Li₃PO₄. For the reaction between POF₃ and Li₃PO₄, a preferred reaction time of 0.5 to 5 hours gives good results. For the reaction between PF₅ or mixtures of PF₅ and POF₃ and Li₃PO₄, a preferred reaction time of 0.5 to 2 hours, most preferably of around 1 hour gives good results, too. The reaction speed is very fast.

In another preferred embodiment the compound of general formula M₃PO₄ or the compound of general formula MF has a solubility in the organic solvent present in reaction step (I) of < 1 g/l at ambient conditions. Thus, a slurry of the compound of general formula M₃PO₄ or the compound of general formula MF is generally prepared to which the POF₃, PF₅ or the mixtures thereof is added.

The mixture obtained after the reaction step (I) can be too acidic leading to a product after isolation of lower quality. Thus, in another preferred embodiment the mixture obtained after the reaction step (I) is subjected to a neutralization step. Preferably, the neutralization step is performed in the presence of Li₂CO₃. To this end, the neutralization agent, preferably a carbonate or bicarbonate, more preferably lithium carbonate, is added to the mixture after the reaction step (I), preferably added in solid form. Advantageously, the pH of the mixture after the neutralization step is from 4 to 7, preferably from 5.5 to 6.5, more preferably about 6.

In yet another preferred embodiment the mixture obtained after reaction step (I) and the subsequent neutralization step is subjected to a filtration step.

In still another preferred embodiment the product is isolated by means of spray drying, evaporation of the solvent, crystallisation, lyophilization or a mixture thereof, preferably by means of spray-drying. If a crystallisation step is performed, this step can be performed using cold crystallisation, anti-solvent crystallisation, seeding or a mixture of these technologies.

Another aspect of the present invention concerns crystalline LiPO₂F₂ characterized by an X-ray powder diffraction pattern showing the two strongest peaks at 22.6 ± 0.2 and 27.3 ± 0.2 ° 2-Theta, preferably characterized by an X-ray powder diffraction pattern showing the four strongest peaks at 19.9 ± 0.2, 20.6 ± 0.2, 22.6 ± 0.2, 27.3 ± 0.2 ° 2-Theta.

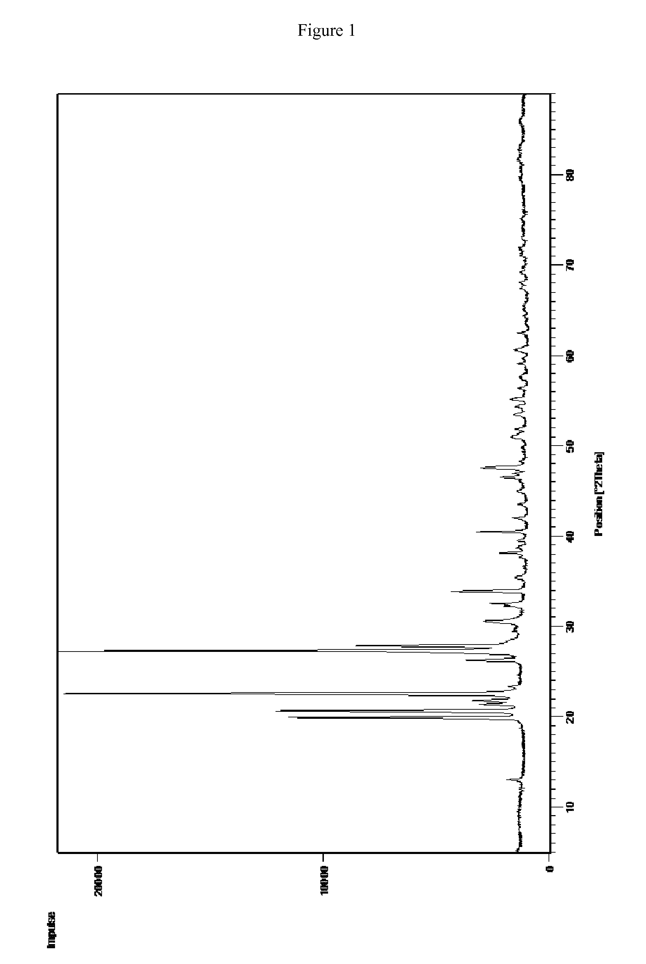

Still another aspect of the present invention concerns crystalline LiPO₂F₂ characterized by an X-ray powder diffraction pattern essentially as shown in Figure 1.

A further aspect concerns crystalline LiPO₂F₂ characterized by a bulk density of < 500 g/l, preferably between 100 and 400 g/l, more preferably between 200 and 300 g/l.

Yet another aspect of the present invention concerns an electrolyte composition for lithium-ion batteries, lithium-sulfur batteries and/or lithium-oxygen batteries comprising the crystalline LiPO₂F₂ according to this invention and further comprising a solvent suitable for electrolyte solutions for lithium-ion batteries, lithium-sulfur batteries and/or lithium-oxygen batteries.

Solvents suitable for electrolyte solutions for lithium-ion batteries, lithium-sulfur batteries and/or lithium-oxygen batteries are known in the art. Suitable examples include the group of dialkyl carbonates (which are linear) and alkylene carbonates (which are cyclic), and wherein the term "alkyl" denotes preferably C1 to C4 alkyl, the term "alkylene" denotes preferably C2 to C7 alkylene groups, including a vinylidene group, acetone, acetonitrile, linear dialkyl carbonates, e.g. dimethyl carbonate, diethyl carbonate, methyl ethyl carbonate, cyclic alkylene carbonates, e.g. ethylene carbonate, propylene carbonate, and vinylidene carbonate, and fluorinated derivatives of the compounds mentioned in this paragraph, e.g. 1-fluoroethyl methyl carbonate, 4-fluoroethylene carbonate or 1-fluoroethyl allyl carbonate.

The concentration of the metal difluorophosphates of the invention in the electrolyte solution is preferably 1 ± 0.2 molar. Often, the electrolyte solution may comprise LiPF₆ and LiPO₂F₂. In the case, the combined concentration of the two compounds in the electrolyte solution is preferably 1 ± 0.2 molar.

Should the disclosure of any of the patents, patent applications, and publications that are incorporated herein by reference be in conflict with the present description to the extent that it might render a term unclear, the present description shall take precedence.

### Examples

### Example 1 : Production of LiPO₂F₂

58 g Li₃PO₄ was dried at 200°C for 18 h and subsequently placed in a Teflon^{®} reactor equipped with a paddle mixer and a Teflon^{®} condenser. Dimethoxyethane (500 ml) was added and the mixture was stirred at 200 rpm. The reaction vessel was subjected to a nitrogen atmosphere and subsequently, POF₃ (103.4 g) was introduced into the mixture via an immersion tube at room temperature over a period of 4.5 h. After the introduction of POF₃ was completed, reaction mixture and vessel were flushed with nitrogen gas for 30 min. 25 g lithium carbonate was added and stirring continued for another 10 min. The mixture was filtered through a 10 µm Teflon^{®} filter with suction (300 mbar on the filtrate side). The filtrate showed pH 6. Volatiles were removed by means of a spray dryer (Buechi B-295- Inert Loop) under the following conditions: inlet temperature 202°C, outlet temperature 115°C, feed rate 7 g/min.

The crude product is dried at 100°C and 100 mbar using a flow of nitrogen of 100 1/h for 18 h to yield 146 g (90 %) of the product.

### Analytical data

PXRD (powder X-ray diffraction): Samples were analysed on a Bruker AXS D8 Advance powder X-ray diffractometer. The wavelength of the radiation was 1.5406A. Measurement conditions were as follows.

| radiation | Cu K*_{α}* |
|---|---|
| source | 38 kV / 40 mA |
| detector | Vantec-1 |
| detector slit | 10.39 mm |
| detector antiscattering slit | 6.17 mm |
| divergence slit | v6.00 |
| antiscattering slit | 0.5° |
| 2θ range | 2° ≤ 2θ ≤ 55° |
| step size | 0.017° |
| step time | 0.2s |

**Table 1 : XRD data for the compound according to example 1**

| Position [° 2 Theta] | Intensity [counts] | Position [° 2 Theta] | Intensity [counts] |
|---|---|---|---|
| 13,03 | 538,88 | 46,08 | 310,03 |
| 19,91 | 7900,17 | 46,52 | 1011,01 |
| 20,64 | 9222,67 | 46,89 | 509,58 |
| 21,37 | 1732,4 | 47,55 | 1897,22 |
| 21,78 | 2100,5 | 48,29 | 272,25 |
| 22,55 | 17484,82 | 50,88 | 588,15 |
| 23,32 | 631,65 | 51,81 | 479,78 |
| 26,27 | 2304,76 | 53,45 | 560,08 |
| 27,31 | 16984,9 | 54,33 | 464,72 |
| 27,86 | 6620,6 | 55,12 | 674,57 |
| 28,45 | 729,11 | 56,35 | 306,58 |
| 29,59 | 439,26 | 57,41 | 269,72 |
| 30,56 | 1769,7 | 57,72 | 302,43 |
| 32,25 | 885,48 | 59,08 | 343,91 |
| 32,51 | 1351,54 | 59,66 | 203,39 |
| 33,90 | 2813,27 | 60,61 | 544,44 |
| 35,42 | 426,98 | 62,45 | 340,32 |
| 37,64 | 245,17 | 67,40 | 246,56 |
| 38,13 | 1005,28 | 68,07 | 288,53 |
| 38,67 | 394,43 | 69,21 | 269,34 |
| 39,53 | 381,03 | 69,72 | 167,86 |
| 40,46 | 1695,09 | 71,07 | 206,26 |
| 42,01 | 549,94 | 71,84 | 280,12 |
| 43,51 | 344,46 | 73,04 | 151,94 |
| 44,94 | 446,99 | | |

¹⁹F-NMR (470.94 MHz; D₆-acetone) : -84.25 ppm (doublet, J= 926 Hz) The bulk density at ambient conditions of the LiPO₂F₂ according to example 1 was determined to be 280 g/l. In a comparable example, the bulk density of the LiPO₂F₂ prepared according to example 3 of WO 2012/016924 was determined to be 560 g/l.

### Example 2 : Electrolyte solution for lithium ion batteries, lithium sulfur batteries and/or lithium-oxygen batteries

117 g LiPF₆, 23 g LiPO₂F₂ (obtained analogously to example 1), 50 g 4-fluoroethylene carbonate and propylene carbonate are mixed in amount such that a total volume of 1 liter is obtained. The resulting solution contains 0.77 mol LiPF₆ and 0.23 mol LiPO₂F₂.

## Claims

1. A process for the production of a compound of general formula MPO₂F₂, wherein M is Li, Na or K, comprising a reaction step (I) of a compound of the general formula M₃PO₄, M₂CO₃, MHCO₃ or a mixture thereof, wherein each M is defined as above, with POF₃, PF₅ or a mixture thereof, to form the compound of general formula MPO₂F₂, wherein the reaction is performed in the presence of an organic solvent.

2. The process of claim 1 wherein the compound of general formula MPO₂F₂ has a solubility in the organic solvent of > 1 g/l at ambient conditions.

3. The process according to claim 2 wherein M is Li.

4. The process according to claim 3 wherein the reaction is a reaction of Li₃PO₄ with POF₃ to form LiPO₂F₂.

5. The process according to any one of the claims 1 to 4 wherein the organic solvent is a diether or a polyether.

6. The process according to claim 5 wherein the organic solvent is a diether.

7. The process according to claim 6 wherein the diether is 1,2-dimethoxyethane.

8. The process according to any one of the claims 1 to 7 wherein the mixture obtained after the reaction step (I) is subjected to a neutralization step.

9. The process of step 8 wherein the neutralization step is performed in the presence of a carbonate, preferably in the presence of Li₂CO₃.

10. The process according to claim 8 or 9 wherein the mixture obtained after reaction step (I) and the subsequent neutralization step is subjected to a filtration step.

11. The process according to any one of the claims 1 to 10 wherein the product is isolated by means of spray drying, evaporation of the solvent, crystallisation, lyophilization or a mixture thereof.

12. Crystalline LiPO₂F₂ **characterized by** an X-ray powder diffraction pattern showing the two strongest peaks at 22.6 ± 0.2 and 27.3 ± 0.2 ° 2-Theta.

13. The crystalline LiPO₂F₂ according to claim 12 **characterized by** an X-ray powder diffraction pattern showing the four strongest peaks at 19.9 ± 0.2, 20.6 ± 0.2, 22.6 ± 0.2, 27.3 ± 0.2 ° 2-Theta.

14. Crystalline LiPO₂F₂ **characterized by** an X-ray powder diffraction pattern essentially as shown in Figure 1.

15. An electrolyte composition for lithium-ion batteries, lithium-sulfur batteries and/or lithium-oxygen batteries comprising the crystalline LiPO₂F₂ according to any one of the claims 11 to 14 and further comprising a solvent suitable for electrolyte composition for lithium-ion batteries, lithium-sulfur batteries and/or lithium-oxygen batteries.
